# FASCICULE DE BREVET EUROPEEN

(11) **EP 2 009 808 B1**
(45) Date de publication et mention de la délivrance du brevet: **03.08.2011**
(21) Numéro de dépôt: 08354034.4
(22) Date de dépôt: 05.06.2008
(51) Int. Cl.: H04B 3/54

(54) **Communication par courant porteur pour les tableaux centralisés de commande**
Kommunikation über Trägerstrom an die zentralen Schalttafeln
Carrier current communication for centralised control panels

(30) Priorité: 25.06.2007 FR 0704522
(43) Date de publication de la demande: 31.12.2008
(73) Titulaire: Schneider Electric Industries SAS, 92500 Rueil-Malmaison (FR)
(72) Inventeur: Coutelou, Olivier, c/o Schneider Electric Ind. SAS, 38050 Grenoble Cedex 09 (FR); Contini, Erick, c/o Schneider Electric Ind. SAS, 38050 Grenoble Cedex 09 (FR); Dupuis, Laurent, c/o Schneider Electric Ind. SAS, 38050 Grenoble Cedex 09 (FR)
(74) Mandataire: Péru, Laurence

(56) Documents cités:
- DE-A1- 10 131 189
- JP-A- 2005 157 747

## Description

### DOMAINE TECHNIQUE

L'invention concerne des modules de contrôle-commande adaptés pour les armoires intelligentes centralisées, dans une application préférée pour le fonctionnement de moteurs, alors appelés tableaux intelligents centralisés de contrôle-commande moteur iMCC (« *intelligent Motor Control Center* »).

Plus particulièrement, l'invention se rapporte à des transmissions par courant porteur en ligne, ou CPL, dans les iMCC, et à un procédé d'adaptation de l'impédance des composants des iMCC pour un fonctionnement fiable. Les modules et tableaux de modules selon l'invention comprennent ainsi des dispositifs d'impédance réglables.

### ETAT DE LA TECHNIQUE

Les iMCC sont des tableaux basse tension dédiés à la distribution d'énergie, au contrôle-commande et à la protection des moteurs, utilisés notamment pour les procédés continus ou semi-continus dans lesquels les départs-moteurs sont regroupés en un même lieu pour des raisons d'exploitation et de maintenance. En particulier, un automate programmable relie, par l'intermédiaire d'un réseau de communication, des dispositifs de départs-moteurs qui offrent des fonctions électrotechniques et des fonctions de mesure ; sur le réseau de communication transitent des informations de type commande en provenance de l'automate (ouverture/fermeture de la puissance) et des informations de type contrôle (remontées de données). Les temps de scrutation entre les différents échanges doivent être maîtrisés et de préférence de l'ordre de quelques centaines de millisecondes.

Cependant, pour certaines applications, le nombre très important de départs-moteurs à intégrer rend le câblage du réseau de communication de l'iMCC complexe et onéreux. De plus, une fois le tableau réalisé, il devient problématique d'ajouter un départ-moteur à un iMCC existant, et/ou d'en modifier un des éléments, sans devoir tout redimensionner.

Afin de contourner cette difficulté, il a été envisagé de faire transiter l'information dans les tableaux par l'intermédiaire des lignes électriques déjà présentes, qui notamment alimentent les départs-moteurs : selon l'invention, l'automate programmable et les départs-moteurs communiquent par une technologie à courant porteur en ligne, ou CPL, par les câbles auxiliaires. Ainsi, le nombre de câbles dans les armoires électriques intelligentes iMCC est réduit, tout comme le nombre de connexions, ce qui abaisse le coût final pour le client et simplifie la maintenance ; déjà au montage, l'intervenant a plus de facilité, en raison de la diminution du volume de câbles et de la réduction des raccordements. Cette solution est par exemple évoquée dans le document JP 2005157747.

Cependant, même si ce type de communication semble particulièrement bien adapté aux sites industriels, des problèmes de fiabilité et de rendement surviennent. En particulier, l'atténuation des signaux CPL peut être très importante et donc le signal utile CPL peut être trop faible pour un rendement optimal, notamment dans les sites présentant de multiples iMCC comprenant chacun de nombreux départs-moteurs. Pour que l'application de la communication par technologie CPL dans les iMCC fonctionne correctement, il faut ainsi adapter les produits CPL afin de prendre en compte les spécificités du réseau d'alimentation qui est utilisé pour communiquer avec des moteurs.

### EXPOSE DE L'INVENTION

Parmi autres avantages, l'invention vise à pallier des inconvénients de la transmission CPL dans les architectures de commande et contrôle centralisés de nombreux moteurs, notamment jusqu'à 400. Plus généralement, l'invention concerne un tableau de plusieurs modules de contrôle-commande, mis en parallèle de façon dense, apte à communiquer avec un système central par l'intermédiaire de moyens de communication, notamment de type Ethernet. Les moyens de communication à l'intérieur du tableau sont, autant que possible, réalisés par courant porteur en ligne.

Selon un aspect, l'invention est relative à un module de contrôle-commande du tableau, qui comprend un dispositif de départ de ligne, notamment apte à commander et/ou contrôler un moteur, par exemple un relai électronique, qui peut être connecté à des premiers moyens de communication pour transférer des informations dans les deux sens à un dispositif de réception et conversion CPL. Les premiers moyens de communication sont adaptés au dispositif de départ de ligne : il peut s'agir d'un bus de communication série (« *Serial Line* ») par exemple en Modbus® SL (c'est-à-dire un protocole de communication numérique de type « maître-esclaves » utilisant une liaison série), ou une connexion TCP/IP, ou la communication peut être directe si le convertisseur est intégré au dispositif de départ de ligne, ou toute autre alternative.

Le module selon l'invention comprend ainsi en outre une interface courant porteur comprenant ce dispositif de réception et conversion relié à une ligne principale de courant qui peut être connectée à l'alimentation électrique par l'intermédiaire d'un système d'entrée. La ligne principale de l'interface courant porteur, ou interface CPL, selon l'invention comprend un dispositif adaptateur d'impédance du module, dont l'impédance peut notamment atteindre 500 Ω, de sorte que le module a une impédance prenant au moins deux valeurs différentes, une valeur basse de l'ordre de celle du dispositif de réception/conversion, usuellement de l'ordre de 50 Ω, et une valeur élevée.

Avantageusement, dans un module selon l'invention, l'alimentation du dispositif d'entrée de ligne se fait par l'intermédiaire de l'interface CPL, qui comprend alors une ligne auxiliaire de courant de sorte que, de préférence, une seule connexion du réseau d'alimentation au module selon l'invention est suffisante. La ligne auxiliaire de courant peut notamment comprendre un dispositif qui accroît l'impédance du dispositif de départ de ligne ; alternativement, ce dispositif d'augmentation d'impédance est couplé au dispositif de départ de ligne.

L'invention concerne également un tableau comprenant plusieurs modules précédents, par exemple un ensemble de vingt, voire cent-vingt, modules sur une ligne, ou plusieurs colonnes (jusqu'à vingt) comprenant chacune par exemple vingt modules, dont les lignes principales de courant sont reliées à la même alimentation. Le signal CPL transitant par la ligne d'alimentation est lu et/ou généré par un appareil de tête, par exemple un automate ou un système informatique. L'appareil de tête peut être directement connecté à la ligne d'alimentation pour recevoir les signaux CPL. Selon un mode de réalisation préféré, l'appareil de tête communique par l'intermédiaire de deuxièmes moyens de communication, par exemple une liaison Ethernet ; dans ce cas, un deuxième dispositif de conversion/réception du signal CPL est intercalé entre le tableau selon l'invention et l'appareil de tête.

De préférence, le deuxième dispositif de conversion/réception fait partie d'une deuxième interface CPL, et toutes les interfaces CPL d'une architecture selon l'invention sont identiques. Pour s'adapter à la localisation des produits CPL, le dispositif adaptateur d'impédance sur la ligne principale de l'interface CPL est variable : en particulier, son impédance pourra être nulle pour une deuxième interface connectée à l'appareil de tête et haute pour une première interface faisant partie d'un module selon l'invention. Les différentes valeurs de l'impédance du module et/ou de l'interface CPL peuvent être obtenues par le choix entre plusieurs branches d'impédance différente au niveau du système d'entrée de l'alimentation.

Selon un mode de réalisation préféré, le dispositif d'adaptation a une impédance ajustable qui peut être réglée en fonction de l'utilisation et de la localisation du module selon l'invention. Avantageusement, le tableau selon l'invention comprend en outre un moyen électronique permettant de régler les valeurs de cette impédance ajustable sur la base d'une mémoire dudit moyen qui donne la valeur d'impédances optimales selon l'architecture du tableau. Ce moyen électronique peut faire partie d'un appareil de tête ou être additionnel.

Avantageusement, le moyen électronique de réglage des impédances comprend des moyens de détermination, par exemple algorithmiques, permettant d'ajuster les impédances une à une. Ainsi, selon un autre aspect, l'invention concerne un procédé d'ajustement des impédances d'interfaces courant porteur en ligne dans un tableau de contrôle-commande.

Dans un tableau comprenant une pluralité de modules selon l'invention, que ce soit lors de l'installation ou pendant le processus usuel d'opération et en cours de scrutations, le procédé selon l'invention comprend une étape de détermination des impédances optimales d'un ensemble d'interfaces à partir de valeurs en mémoire et de l'architecture du tableau, voire de la localisation des modules. Une étape de réglage consécutive, manuelle ou de préférence automatisée par autoréglage, permet d'optimiser l'architecture ainsi composée.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 représente un tableau iMCC existant selon une technologie interne.
La figure 2 illustre schématiquement la solution selon l'invention.
La figure 3 montre schématiquement des adaptations des interfaces CPL pour un tableau selon l'invention.
La figure 4 montre un autre exemple de module et d'architecture selon l'invention.

### DESCRIPTION DETAILLEE D'UN MODE DE REALISATION PREFERE

Bien que développée pour résoudre un problème inhérent à une densité importante de dispositifs de communication, l'invention s'applique à tout système de contrôle et commande comprenant au moins un départ de ligne, par exemple un appareil de coupure et/ou de contrôle de puissance, duquel et vers lequel des informations transitent : le module selon l'invention permet la transformation du signal en provenance du dispositif de départ de ligne pour le restituer en signal CPL. Un exemple notable concerne un ensemble compact d'appareils communicants, qui sont nombreux sur des distances courtes, comme les départs de ligne d'un tableau basse tension, voire les coupleurs d'un tableau moyenne tension. L'invention trouve une application particulière et préférée dans le contrôle-commande de moteurs par tout dispositif adapté, par exemple un variateur de vitesse, un contacteur ou un disjoncteur, et notamment par l'intermédiaire d'un relai électronique de protection assurant différentes fonctions de protection et de contrôle du moteur. Ce dernier mode de réalisation sera décrit en détail, mais l'homme du métier transposera cet enseignement aux autres utilisations du module et du tableau selon l'invention.

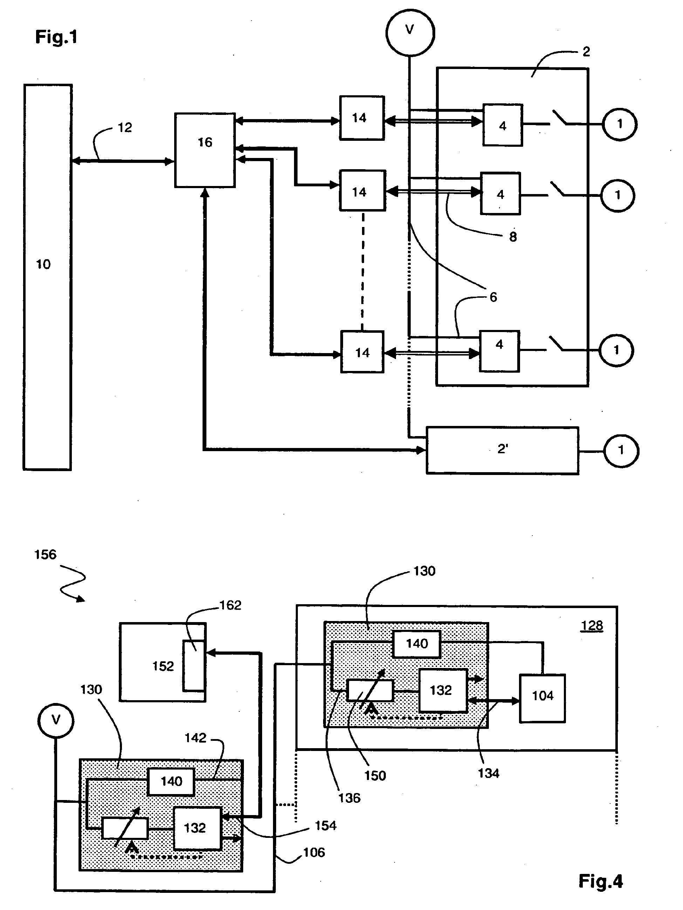

La solution selon l'invention est de préférence adaptée pour des tableaux de commande et contrôle centralisés de moteurs conformes à l'art antérieur, avec au moins les mêmes capacités en ce qui concerne nombre et rapidité de commandes. Par exemple, un type de commande de moteurs 1 par un tableau de type iMCC 2 est illustré en figure 1 dans lequel chaque moteur 1 est associé à un dispositif de départ de ligne 4. Une architecture compatible avec l'invention peut être composée d'une ligne 2 comprenant jusqu'à 120 moteurs 1, ou elle peut se présenter sous la forme d'une juxtaposition de lignes, par exemple 20 colonnes 2, 2' comprenant chacune jusqu'à 20 moteurs 1 ; il est entendu que les termes lignes et colonnes servent juste à différencier les éléments et, bien que les colonnes soient effectivement souvent composées d'une superposition sur une hauteur de l'ordre de 2 m à 2,2 m de départs 4, la notion de verticalité n'est que relative.

De préférence, le dispositif de départ de ligne est un relai électronique de protection 4, alimenté par une ligne de courant 6, par exemple du courant V continu de 24 V, qui transmet les informations qu'il reçoit par un bus de communication 8, par exemple en protocole Modbus® SL, vers un automate 10, qui commande par ailleurs chacun des relais 4. L'automate 10 peut être localisé de façon relativement éloignée du tableau de commande 2, et la communication est effectuée classiquement par une liaison Ethernet 12, par exemple selon un protocole TCP/IP. A cette fin, un convertisseur Ethernet 14 est associé à chaque bus de communication 8 d'un relai 4, et un commutateur 16 commun au tableau 2, 2' relie les convertisseurs 14 pour être connecté par la liaison Ethernet 12 à l'automate 10. Dans une application préférée, l'iMCC 2 est capable de réactualiser ses informations, tant à la réception de contrôle qu'à l'envoi de commande, toutes les 500 ms, de préférence toutes les 200 ms.

Le nombre de raccordements à effectuer devient vite rédhibitoire, et l'encombrement du système notable. Or, la ligne d'alimentation 6 des relais 4 est de toute façon présente dans les tableaux 2 de contrôle-commande : selon l'invention, il s'agit de faire communiquer l'automate programmable 10 et les départs-moteurs 4 par une technologie CPL (courant porteur en ligne) par ces câbles 6. Le principe de la communication CPL repose sur l'injection dans un câble, parallèlement au passage du courant d'alimentation, d'un signal de fréquence différente qui sera détecté par des moyens appropriés; dans le cadre de l'invention, la fréquence utilisée est de préférence plus élevée que celle de l'alimentation, notamment de l'ordre de 1 à 30 MHz. Le protocole d'adressage par CPL est compatible avec les systèmes de communication existants ; il n'est donc pas nécessaire de modifier le protocole TCP des architectures selon la figure 1. L'invention s'applique dans le cas précédent d'alimentation auxiliaire V en 24 DC ou 48 DC, mais également pour le 110 ou le 230 V AC, voire le 24 ou le 400 V AC, ou toute autre tension.

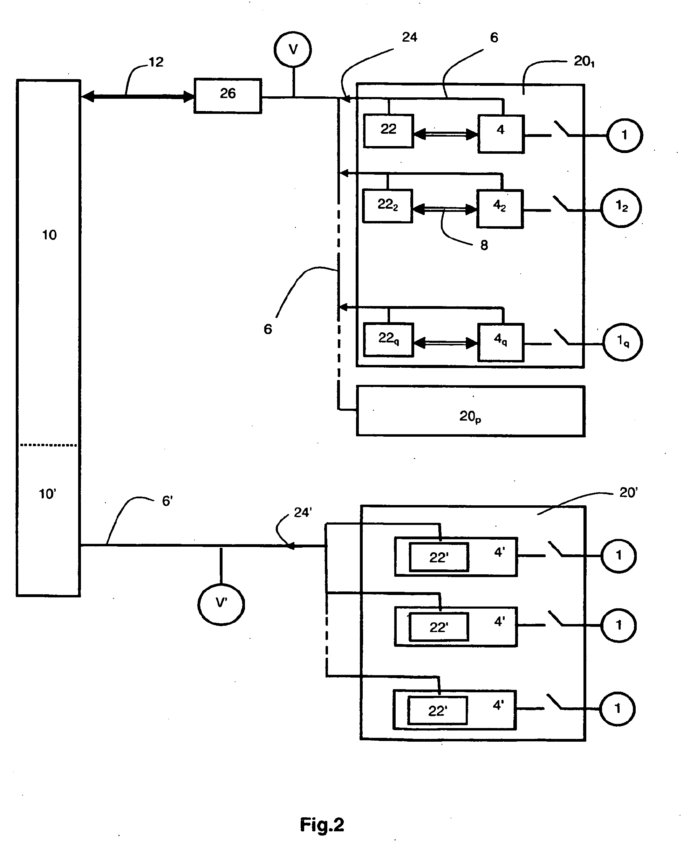

En figure 2 est représenté schématiquement un tableau 20 selon le principe de l'invention, où sont conservés le plus d'éléments précédents possible, c'est-à-dire que ni l'automate 10, ni les relais 4, ni leurs moyens de communication 8 ne sont modifiés ; le tableau 20 est schématiquement représenté comme un ensemble de p colonnes 20ᵢ. Chaque relai 4 est ainsi d'une part alimenté par la ligne de courant d'alimentation 6, et d'autre part connecté par ses moyens de communication 8 à un premier dispositif CPL 22, qui est lui aussi branché sur la ligne de courant 6 : le dispositif CPL 22 est de type récepteur/convertisseur et permet à un signal circulant sur la ligne de courant 6 d'être transmis par le bus 8 au relai 4, et inversement. Comme, de préférence, les deuxièmes moyens 12 de communication et contrôle de l'automate 10 restent similaires et comprennent une liaison Ethernet 12, le signal CPL 24 en provenance des différents dispositifs 22 est converti une deuxième fois pour Ethernet, au niveau d'un deuxième dispositif CPL 26 maître *(« power line master* »), le réseau 6, 22, 26 du tableau 20 étant alors en étoile.

Il est possible de modifier les moyens de communication de l'automate 10' par suppression de la ligne Ethernet 12 et communication directe par CPL : le signal CPL 24' circulant alors sur la ligne d'alimentation 6' peut être lu et/ou généré directement par l'automate 10'. Dans un autre mode de réalisation, illustré conjointement par souci de concision uniquement, le relai électronique 4' peut être modifié, pour intégrer un récepteur CPL 22', auquel cas les informations 24' sont transmises directement depuis l'automate 10' via la ligne d'alimentation 6' au récepteur 22' dans le relai 4'.

Le choix d'une communication CPL dans une armoire iMCC nécessite par ailleurs des adaptations pour obtenir des communications fiables et reproductibles, étant donné la compacité du système obtenu et l'utilisation maximale des câblages existants.

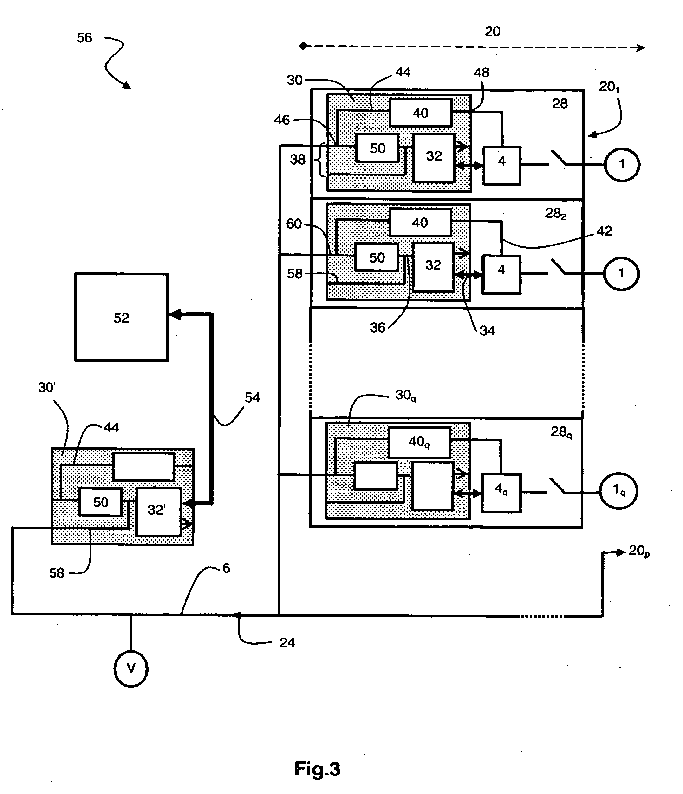

Tel qu'illustré en figure 3, un tableau 20 selon l'invention comprend ainsi p colonnes 20ᵢ pouvant chacune comprendre qᵢ modules 28 pour chacun des q moteurs 1 de chaque colonne 20ᵢ ; par souci de concision, les indices i relatifs aux colonnes seront omis dans la suite de la description, la distinction entre les colonnes d'un tableau 20 étant relative à la construction de l'iMCC plutôt qu'à son fonctionnement.

Chaque module 28 comprend un dispositif de départ-moteur 4 qui est associé à une interface courant porteur 30. L'interface CPL 30 comprend un dispositif de conversion/réception des signaux 32 associé à des premiers moyens de communication 34 et relié à une ligne principale de courant 36, qui peut être connectée à la ligne d'alimentation électrique 6 au moyen d'un premier système d'entrée d'alimentation 38. Les moyens de conversion 32 permettent de transformer l'information transitant dans les premiers moyens de communication 34 selon un premier protocole en signal CPL représentatif pouvant circuler dans la ligne de courant 36 puis la ligne d'alimentation 6, et inversement. Les premiers moyens de communication 34 sont reliés au dispositif de départ de ligne 4.

Par souci de clarté et de concision, seul le mode de réalisation dans lequel le départ de ligne 4 communique avec un convertisseur/récepteur CPL externe 32 a été représenté et détaillé ; il est évident que la solution selon l'invention peut être mise en oeuvre de la même façon pour une interface CPL 22' intégrée dans un relai électronique 4', auquel cas les premiers moyens de communication 34 sont internes.

Dans les applications iMCC 20 schématisées, p colonnes 20ᵢ de q départs 4ⱼ chacune sont gérées simultanément, et donc, à proximité de chacun des q × p premières interfaces CPL 30 connectées au réseau d'alimentation 6 se trouve un relai électronique 4, qui est également alimenté par le réseau 6. Pour une application aux moteurs 1, les dispositifs de départ 4 qui leur sont directement associés présentent, par nature, une impédance basse, qui est défavorable à la propagation des signaux CPL. Tel qu'illustré en figure 3, pour chaque module 28 de contrôle et commande, l'impédance du dispositif de départ de ligne 4 est alors de préférence rehaussée par un dispositif d'augmentation de l'impédance 40, par exemple deux inductances, mis en place sur sa ligne d'alimentation 42. Le dispositif d'augmentation de l'impédance 40 est adapté à tous les types d'alimentation que l'on peut rencontrer (courant continu ou alternatif, transmission CPL à différentes fréquences) ; par exemple, pour une application à des moteurs 1 et avec des dispositifs de départ de ligne 4 qui peuvent être les mêmes relais électroniques que précédemment, l'impédance Z₄₀ peut être de l'ordre de 500 Ω.

Selon un mode préféré de réalisation de l'invention, par souci de facilité de mise en oeuvre et de câblage, le dispositif adaptateur d'impédance 40 du départ-moteur 4 est lui aussi intégré à la première interface courant porteur 30 : l'alimentation 42 du dispositif de départ de ligne 4 est réalisée par l'intermédiaire de l'interface CPL 30 qui comprend alors une ligne de courant auxiliaire 44, entre une entrée 46, qui est de préférence dérivée de la ligne de courant 36 principale au niveau du système d'entrée 38 d'alimentation, et une sortie 48 de connexion de la ligne d'alimentation 42 du dispositif de départ de ligne 34. Sur cette ligne auxiliaire 44 est mise en place l'impédance Z₄₀. De cette façon, le raccordement des différents modules 28 d'une armoire 20 est facilité : le relai 4 est raccordé à la sortie de connexion 48 et au bus de communication 34 de l'interface CPL 30 ; puis l'alimentation 6 est connectée à la première interface courant porteur 30 au niveau de son entrée 38.

Dans le cas particulier des applications aux iMCC 20, le nombre de premières interfaces CPL 30 reliées en parallèle au sein d'un tableau 20 peut être élevé, avec p = 120, chacune des interfaces pouvant n'être éloignée de sa voisine que de moins de 50 cm ou 25 cm, voire les modules 28 sont séparés de 10 cm en moyenne l'un de l'autre. Alternativement, il est possible de multiplier, dans un tableau 20, les colonnes 20ᵢ d'une vingtaine de modules 28q en les juxtaposant jusqu'à p = 20, et d'avoir alors une densité d'interfaces CPL importante, avec q × p = 200 ou 400 points environ, et ce dans un espace réduit d'une hauteur de 2 à 2,2 m sur une vingtaine de mètres.

Or l'impédance standard Z₃₂ d'un convertisseur/récepteur CPL 32 est de l'ordre d'environ 50 Ω ; l'impédance globale de la ligne CPL, également ligne d'alimentation, 6, 36 diminue ainsi de façon significative en raison de la mise en parallèle des différentes interfaces 30 additionnelles aux éléments de fonctionnement 4 des moteurs 1 sur une ligne 6 relativement courte. Ici encore, cette impédance basse de la ligne détériore la propagation des signaux CPL 24, détérioration de la communication qui peut avoir lieu entre les points les plus distants 4_{1,1}, 4_{p,q} de la ligne 6, 36, mais aussi entre deux points physiquement proches 4₁, 4₂, éloignés par exemple de 10 à 20 cm ; le fonctionnement correct de l'installation et des moteurs 1 peut s'en trouver amoindri, voire empêché.

Pour éviter cette baisse significative d'impédance de la ligne 6, un second dispositif d'adaptation de l'impédance 50 est ajouté en série avec le convertisseur CPL 32 au sein de l'interface 30 : le circuit d'adaptation 50 est intercalé entre le premier système d'entrée ou connecteur 38 et le dispositif de conversion 32, sur la ligne de courant 36, de sorte qu'une deuxième impédance Z₅₀, de préférence élevée et par exemple de l'ordre de 500 Ω, vient s'ajouter à la première impédance standard Z₃₂ pour constituer la troisième impédance de l'interface courant porteur 30 en tant que telle : Z₃₀ = Z₃₂ + Z₅₀ (= 550 Ω par exemple).
Ainsi, le dispositif adaptateur d'impédance 50 permet à l'impédance du module d'entrée 28 d'avoir au moins une première valeur basse et une deuxième valeur élevée.

Bien qu'*a priori* évidente, cette solution va à l'encontre des usages de l'homme du métier étant donné qu'il est connu qu'un produit CPL doit avoir une basse impédance pour optimiser la transmission d'informations : l'ajout du deuxième circuit d'adaptation 50 fait perdre quelques dB au convertisseur CPL 32. Cependant, il a été trouvé lors du développement de l'invention que cette perte ponctuelle est largement compensée par le gain global de l'ensemble 20, qui bénéficie d'une ligne CPL 6 dont l'impédance reste suffisamment élevée pour la bonne propagation des signaux. Autrement dit, en détériorant légèrement et localement la puissance du signal, la communication sur l'ensemble du réseau est rendue possible et optimisée.

Dans le cas de la configuration en étoile, il est avantageux de privilégier la deuxième interface courant porteur 30' (c'est-à-dire le produit maître central), qui n'est pas mise en parallèle avec toutes les autres. A cette fin, la deuxième interface CPL 30' conserve de préférence la première impédance standard, basse (de l'ordre de 50 Ω environ), alors que les autres interfaces CPL 30, reliées aux relais de départ 4 des moteurs 1, voient leur impédance adaptée par insertion du circuit 50 précédemment défini de sorte que le module 28 prend une deuxième valeur, élevée, d'impédance.

Le deuxième produit CPL maître 30' est destiné à la communication entre l'armoire 20 de modules selon l'invention 28 et un appareil de tête 52 de contrôle et commande, par exemple un automate ou un ordinateur. A ce titre, l'interface CPL centrale 30' comprend des moyens de conversion des signaux 32' associés à des deuxièmes moyens de communication 54 et connectés à la ligne d'alimentation électrique 6 ; les moyens de conversion 32' permettent de transformer l'information transitant dans les deuxièmes moyens de communication 54 qui sont reliés au système de commande 52 en signal CPL représentatif pouvant circuler dans la ligne d'alimentation 6, et inversement.

Selon un mode de réalisation préféré, toutes les interfaces courant porteur 30, 30' relatives à une architecture de contrôle 56 comprenant un tableau 20 selon l'invention sont identiques. En particulier, les moyens de conversion 32 de l'interface CPL 30 permettent une conversion des signaux CPL pour les acheminer par deux moyens de communication 34, 54 qui peuvent être différents et sont sélectionnés pour une connexion à l'appareil de tête 52 ou à un relai 4 selon la localisation du produit 30, 30' dans le réseau 56.

En ce qui concerne l'impédance 50 ajoutée aux premières interfaces 30 et non aux interfaces maîtres 30', un mode de réalisation concerne la formation du système d'entrée d'alimentation électrique 38 de l'interface 30 en deux entrées vers deux branches 58, 60 distinctes de la ligne de courant principale 36. La première branche 58, simple ligne de courant, correspond à une entrée de première impédance basse, principalement l'impédance standard Z₃₂, et sera utilisée pour le produit CPL 30' central connecté à l'automate 52 ; la deuxième branche 60 comporte le dispositif d'adaptation d'impédance 50 : cette entrée haute impédance (Z₃₂ + Z₅₀) est utilisée pour les modules 28 selon l'invention. Lorsque l'interface CPL 30 comprend en outre le dispositif d'adaptation d'impédance 40 du départ-moteur 4, le branchement 46 de la ligne auxiliaire 44 est réalisé sur 1a deuxième branche 60, entre le système d'entrée 38 et l'impédance 50.

Il est possible d'affiner ce mode de réalisation en multipliant le nombre de branches 58, 60 d'entrée de la ligne de courant principale 36 de l'interface CPL 30 pour s'adapter à différents modes de connexion, différentes architectures en étoile, et différents dispositifs d'entrée de ligne 4.

Selon un autre mode de réalisation, l'adaptation d'impédance relative à la mise en parallèle de nombreuses interfaces CPL est optimisée par la réalisation d'une architecture 56 mettant en oeuvre des produits dont les impédances ajoutées selon l'invention ont des valeurs ajustables ; la valeur Z des impédances ajoutées pourra alors choisie selon le type de topologie (p,q) de la ligne CPL et/ou le nombre p×q d'interfaces connectées à la ligne et/ou l'emplacement i,j de l'interface connectée sur la ligne.

Un deuxième mode de réalisation d'un module 128 selon l'invention est illustré en figure 4, les signes de référence étant augmentés de 100 par rapport au premier mode de réalisation. Ici encore, l'interface CPL 130 peut être utilisée en temps que maître ou comme convertisseur des dispositifs d'entrée de ligne 104 ; elle comprend avantageusement une ligne de courant auxiliaire 144 avec un adaptateur 140 d'impédance, fixe ou variable, du dispositif d'entrée de ligne 104. Les interfaces CPL 130 comprennent une ligne de courant principale 136 du convertisseur/récepteur CPL 132 sur laquelle est inséré un dispositif d'impédance variable 150, dont l'impédance peut être ajustée entre deux valeurs, notamment entre zéro et une valeur maximale ; le réglage peut être manuel, par exemple par un moyen de réglage de type potentiomètre, ou réalisé par une programmation logicielle, avec un moyen électronique 162 qui règle la valeur de l'impédance Z₁₅₀ en fonction d'une valeur prédéterminée.

Selon une option avantageuse, les valeurs optimisées des impédances Z₁₅₀ sont stockées dans une mémoire dudit moyen électronique de réglage 162. Le moyen électronique de réglage 162 peut notamment faire partie de l'appareil de contrôle-commande 152. La valeur prédéterminée des impédances Z₁₅₀ à régler peut être calculée ; alternativement, notamment si l'architecture 156 est complexe, une fois la géométrie du réseau 106, 120 définie, des « tables de valeurs » peuvent être dressées par apprentissage avec des mesures ou par simulations sur un outil de simulation de ligne CPL et stockées ; la valeur optimisée de l'impédance Z₁₅₀ est alors paramétrée sur l'interface CPL 130 lors de l'installation.

Selon une option avantageuse, l'adaptation des différentes impédances 150 des premières interfaces CPL 130 présentes sur l'iMCC 120 selon l'invention est affinée en automatisant un réglage produit par produit durant la phase d'installation des modules 128 selon l'invention. De fait, la mise en place de l'architecture 156 de contrôle-commande est réalisée en connectant chaque module 128 successivement ; l'atténuation supplémentaire du signal CPL due à la connexion sur un tableau 120 de n modules 128 d'une nouvelle interface 130ₙ₊₁ (et donc d'un produit de basse impédance de défaut sur la ligne 106) est suffisamment faible pour qu'il soit possible de communiquer les informations par CPL.

En particulier, dans un tel algorithme d'installation, les moyens électroniques de réglage 162, par exemple partie de l'appareil de tête 152, conservent en mémoire des tables de valeurs correspondant à des architectures partielles, reprenant un nombre i-j de modules 28 dans le tableau 20, voire en distinguant entre les localisations (i,j) de chaque module ; alternativement, les valeurs en mémoire des moyens électroniques de réglage 162 peuvent être alimentées au fur et à mesure par un algorithme de simulation de la mémoire. Par exemple, si on considère le tableau partiel de n modules 128 mis en place, avec des valeurs Z₁₅₀ optimisées :
- lorsqu'un nouveau module 128ₙ₊₁ est détecté par l'algorithme d'installation de l'armoire 120, par exemple lors d'une requête sur le réseau en cours de réalisation, ou « broadcast », pour établir un état des lieux, les moyens de détermination, par exemple un algorithme, recherchent dans leur mémoire une valeur optimale des différentes impédances Z'₁₅₀ pour n+1 modules 128 ;
- les n+1 valeurs optimisées des impédances Z'₁₅₀ ainsi déterminées sont ensuite envoyées à chaque interface CPL 130ᵢ sur l'ensemble de modules 128_{1→n+1} pour modifier en conséquence leurs impédances par autoréglage.

Ce procédé est réitéré à chaque nouvelle interface 130 connectée : de proche en proche, en rajoutant les modules 128 un par un, on configure l'ensemble 20 de façon optimale.

Bien que donnant des résultats satisfaisants lors de la mise en route et de l'installation d'une iMCC 20, cet algorithme de détermination et réglage des impédances Z₁₅₀ n'est pas optimisé pour les opérations de maintenance ou de réparation qui entraînent le changement d'une interface CPL 130 ou d'un module 128 du tableau 120. En effet, il est alors nécessaire de repasser par la phase d'installation et d'optimisation des impédances Z₁₅₀ une par une, ce qui implique une interruption du processus de production, qui peut être extrêmement pénalisante, voire inenvisageable pour les applications iMCC.

Pour pallier cet inconvénient, un algorithme aménagé peut être mis en place dans les moyens de détermination, et par exemple intégré dans le processus de scrutation en mode de production. De fait, un échange constant d'informations est réalisé entre l'appareil de tête 152 et les dispositifs de conversion/réception CPL 132 pour contrôler et commander les dispositifs de départ de ligne 104 (notamment toutes les 200 ms) : il est possible d'y ajouter des requêtes de type *« broadcast »* qui interrogent parallèlement, ou de temps à autre, l'ensemble du réseau pour vérifier s'il y a une autre architecture 156 d'interface CPL 130 sur la ligne 106; ici encore, la rapidité des échanges implique une modification mineure de l'architecture 156 de sorte que le signal CPL résultant n'est pas fortement atténué et peut transmettre les informations nécessaires. Si c'est le cas, le processus de scrutation en mode production et le processus de réglage automatique des impédances décrit précédemment sont mixés dans le temps jusqu'à ce que le processus de réglage automatique soit terminé.

En particulier, selon un mode de réalisation préféré du procédé découlant de cet algorithme, la succession d'étapes suivantes est réalisée :
1/ l'appareil de tête 152 établit des requêtes de contrôle-commande des dispositifs de départ de ligne 104, selon un processus standard en mode production, avec les différentes interfaces CPL 130, et
   l'appareil de tête 152 envoie une requête supplémentaire pour établir un état des lieux des interfaces CPL 130 connectées à la ligne 106 ;
2/ un algorithme de l'appareil de tête 152 analyse les réponses aux requêtes de contrôle-commande et ajuste les commandes des dispositifs de départs de ligne 104, selon un processus standard en mode production ;
3/ un algorithme décompte les réponses et note le nombre n d'interfaces CPL 130 connectées à la ligne 106 ;
4/ si le nombre n d'interfaces CPL 130 décompté à cette étape 3/ est identique au nombre n d'interfaces CPL 130 décompté lors des requêtes précédentes, l'appareil de tête 152 reprend ses requêtes comme à la première étape 1/ ;
5/ si le nombre n d'interfaces CPL 130 décompté à cette étape 3/ est différent du nombre d'interfaces CPL 130 décompté lors des requêtes précédentes, alors :
   - 5a: les moyens de détermination algorithmiques des moyens de réglage 162 recherchent des valeurs d'impédance Z₁₅₀ optimisées dans la table de valeurs pour n interfaces CPL 130 ;
   - 5b: les valeurs optimisées Z'₁₅₀ sont envoyées à chacune des interfaces CPL, et un autoréglage local de l'impédance 150 de chacune des n interfaces CPL 130 est effectué conformément aux valeurs optimisées ;
   - 5c: l'appareil de tête 152 reprend ses requêtes comme à la première étape 1/.
Ici encore, lors de l'étape 1/, l'état des lieux des interfaces peut comprendre un transfert relatif à l'adressage individuel des interfaces CPL 130_{i,j}, et l'étape 5/ peut comprendre une comparaison entre les localisations de façon à optimiser les impédances Z'₁₅₀ également en fonction des positions (i,j) des modules 128 sur la ligne 106. Les moyens de détermination des impédances et les moyens de réglage 162 peuvent également prendre en compte les deuxièmes interfaces dans des architectures 156 en étoile, et par exemple ne pas leur attribuer une impédance Z₁₅₀ nulle.

Ainsi, selon l'invention, les adaptations des impédances d'un système de communication CPL sont optimisées pour l'utilisation particulière dans des iMCC, et ce pour chaque architecture du réseau. L'utilisation de la communication CPL devient ainsi possible dans cette application, où la fiabilité est impérative.

Grâce à la solution apportée par l'invention, il est donc possible de tirer parti de la technologie CPL dans les tableaux intelligents centralisés de contrôle/commande des moteurs. Notamment, la communication par courant porteur dans les armoires électriques (propagation haute fréquence en conduit), avec adaptation des impédances, est bien adaptée aux sites importants présentant de nombreuses iMCC proches les unes des autres, géométrie qui générerait des interférences pour des communications radio ou WLAN (pour *« Wireless Local Area Network* » : réseau local sans fil).

En outre, quel que soit le réseau de distribution de l'alimentation (chaînage, dérivation,... - courant continu ou alternatif), quel que soit le type de câble d'alimentation utilisé (câble ou fil standard, fil blindé, système auxigaine,...), la solution CPL est envisageable et avantageuse. En particulier, la mise en place des impédances additionnelles et leur adaptation sur les tableaux existants ne pose pas de problèmes, et il est possible de passer d'un tableau classique, non communiquant, à un tableau iMCC : une rénovation sans restructuration complète ou remplacement pour des résultats analogues est permise par le principe selon l'invention.

## Revendications

1. Module de contrôle commande (28, 128) adapté pour être utilisé dans un tableau (20, 120) comprenant:
- une interface courant porteur (30, 130) comprenant un premier système (38) d'entrée d'alimentation électrique (6, 106) ;
- un dispositif de départ de ligne (4, 104) comprenant une entrée d'alimentation électrique (6, 106) ;
- des premiers moyens de communication (34, 134) susceptibles d'être connectés entre le dispositif de départ de ligne (4, 104) et l'interface courant porteur (30, 130) permettant de transmettre des informations selon un premier protocole entre les deux ;
dans lequel l'interface courant porteur (30, 130) comprend un dispositif (32, 132) de conversion et réception du signal connecté aux premiers moyens de communication (34, 134) et à une ligne de courant (36, 136) elle-même reliée au premier système d'entrée d'alimentation électrique (38), ledit dispositif (32, 132) étant apte à transformer l'information transitant dans les premier moyens de communication (34, 134) depuis le premier protocole en signal de courant porteur en ligne représentatif pouvant transiter par la ligne de courant (36, 136), et inversement ;
**caractérisé en ce que** la ligne de courant (36, 136) de l'interface courant porteur (30, 130) comprend des moyens adaptateurs d'impédance (50, 150) de sorte que l'interface courant porteur (30, 130) a une impédance pouvant prendre au moins une première valeur et une deuxième valeur différentes.

2. Module selon la revendication 1 dans lequel le premier système d'entrée (38) de l'interface courant porteur (30) comprend au moins deux entrées distinctes, la ligne de courant (36) est reliée à chacune des entrées par une branche (58, 60), l'impédance de chaque branche (58, 60) étant différente.

3. Module selon l'une des revendications 1 ou 2 dans lequel les moyens adaptateurs d'impédance comprennent un dispositif (150) d'impédance ajustable sur la ligne de courant (136) de l'interface courant porteur (130).

4. Module selon l'une des revendications 1 à 3 dans lequel l'interface courant porteur (30, 130) comprend une ligne de courant auxiliaire (44, 144) entre une entrée (46) et une sortie (48) susceptible d'être reliée à l'entrée d'alimentation du dispositif de départ de ligne (4, 104), la ligne de courant auxiliaire (44, 144) comprenant un dispositif d'adaptation d'impédance (40, 140).

5. Module selon l'une des revendications 1 à 4 dans lequel le dispositif de conversion du signal (32, 132) peut être connecté à des deuxièmes moyens de communication (54, 154) et est apte à transformer l'information transitant dans les deuxièmes moyens de communication (54, 154) en signal de courant porteur en ligne représentatif pouvant transiter par la ligne de courant (6, 106), et inversement.

6. Module selon l'une des revendications 1 à 5 dans lequel le dispositif de départ de ligne (4, 104) est apte à commander un moteur.

7. Tableau centralisé de commande (20, 120) comprenant une pluralité de modules (28, 128) selon l'une des revendications 1 à 6, lesdits modules (28, 128) étant reliés à une même ligne d'alimentation électrique (6, 106) par laquelle peut transiter le signal de courant porteur de ligne de chaque dispositif de conversion et réception (32, 132).

8. Tableau centralisé selon la revendication 7 associé à un appareil de tête (52, 152) connecté à la ligne d'alimentation électrique (6, 106), ledit appareil de tête (52, 152) étant apte à recevoir et émettre des signaux de courant porteur en ligne sur ladite ligne (6, 106) pour contrôler et commander les dispositifs de départ de ligne (4, 104).

9. Tableau centralisé selon la revendication 7 comprenant en outre au moins une deuxième interface courant porteur (30', 130) qui comprend un dispositif de conversion et réception (32', 132) relié à la ligne d'alimentation électrique (6, 106) des modules (28, 128) du tableau (20, 120) et connecté à des moyens de communication (54, 154), ledit dispositif (32', 132) étant apte à transformer le signal de courant porteur en ligne représentatif pouvant transiter par la ligne d'alimentation (6, 106) en information transitant dans lesdits moyens de communication (54, 154).

10. Tableau centralisé selon la revendication 9 associé à un appareil de tête (52, 152) connecté aux moyens de communication (54, 154) de la deuxième interface courant porteur (30', 130), ledit appareil de tête (52, 152) étant apte à communiquer par lesdits moyens de communication (54, 154) pour contrôler et commander les dispositifs de départ de ligne (4, 104).

11. Tableau centralisé selon l'une des revendications 7 à 10 dans lequel toutes les interfaces courant porteur (30, 30', 130) sont identiques.

12. Tableau centralisé selon l'une des revendications 7 à 11 dans lequel les moyens adaptateurs d'impédance des modules (128) du tableau (120) comprennent un dispositif (150) d'impédance ajustable entre deux valeurs, et comprenant en outre un moyen électronique (162) permettant de régler les valeurs des impédances ajustables (Z₁₅₀) sur la base d'une mémoire dudit moyen (162) donnant la valeur d'impédances optimales selon l'architecture du tableau (156).

13. Procédé d'ajustement des impédances d'un tableau centralisé de contrôle-commande (120) selon l'une des revendications 7 à 12 dans lequel les moyens d'adaptation d'impédance des modules (128) dudit tableau (120) comprennent un dispositif d'impédance ajustable (150), le procédé comprenant :
- la détermination de l'architecture (156) du tableau (120) comprenant la détermination du nombre (n) d'interfaces courant porteur (130) ;
- la détermination pour ladite architecture (156) des valeurs optimales d'impédance des interfaces (130) pour la transmission par courant porteur ;
- le réglage des impédances de tous les dispositifs d'impédance ajustable (150) sur les valeurs optimales (Z'₁₅₀) déterminées.

14. Procédé automatisé d'installation d'un tableau selon la revendication 12 par mise en parallèle successive des modules (128) du tableau (120) comprenant : la mise en place d'un module (128) du tableau (120) ; la détermination selon le procédé de la revendication 13 pour l'architecture (156) en place des valeurs optimales d'impédance des interfaces (130) pour la transmission par courant porteur par les moyens électroniques (162) ; le réglage par lesdits moyens électroniques (162) des impédances de tous les dispositifs d'impédance ajustable (150) sur les valeurs optimales déterminées (Z'₁₅₀) déterminées ; et la réitération du procédé par la mise en place d'un nouveau module (128) du tableau (120).

15. Procédé de scrutation et d'ajustement selon la revendication 13 des impédances d'un tableau centralisé de contrôle-commande (120) selon la revendication 12 comprenant :
- une première étape d'établissement des requêtes de contrôle-commande des dispositifs de départ de ligne (104) avec les interfaces (130) et d'une requête de détermination du nombre (n) d'interfaces (130) ;
- une deuxième étape de réglage des impédances de tous les dispositifs d'impédance ajustable (150) par les moyens électroniques (162) lorsque le nombre d'interfaces déterminé lors de la requête de détermination est différent du nombre d'interfaces précédemment déterminé ;
- la réitération du procédé de scrutation et d'ajustement.

## Claims

1. A control and monitoring module (28, 128) suitable for use in a panel (20, 120) comprising:
- a carrier current interface (30, 130) comprising a first input system (38) of an electric power supply (6, 106);
- a line feeder device (4, 104) comprising an electric power supply input (6, 106);
- first communication means (34, 134) able to be connected between the line feeder device (4, 104) and the carrier current interface (30, 130) for transmitting data according to a first protocol between the two;
wherein the carrier current interface (30, 130) comprises a conversion and receiving device (32, 132) of the signal connected to the first communication means (34, 134) and to a powerline (36, 136) itself connected to the first electric power supply system (38), said device (32, 132) being able to transform the data transiting in the first communication means (34, 134) from the first protocol into representative powerline carrier current signal able to transit via the powerline (36, 136), and vice-versa;
**characterized in that** the powerline (36, 136) of the carrier current interface (30, 130) comprises impedance matching means (50, 150) so that the carrier current interface (30, 130) has an impedance able to take at least a different first value and second value.

2. The module according to claim 1 wherein the first input system (38) of the carrier current interface (30) comprises at least two distinct inputs, the powerline (36) is connected to each of the inputs by a branch (58, 60), the impedance of each branch (58, 60) being different.

3. The module according to one of claims 1 or 2 wherein the impedance matching means comprise a device (150) for adjusting the impedance on the powerline (136) of the carrier current interface (130).

4. The module according to one of claims 1 to 3 wherein the carrier current interface (30, 130) comprises an auxiliary powerline (44, 144) between an input (46) and an output (48) designed to be connected to the power supply input of the line feeder device (4, 104), the auxiliary powerline (44, 144) comprising an impedance matching device (40, 140).

5. The module according to one of claims 1 to 4 wherein the signal conversion device (32, 132) can be connected to second communication means (54, 154) and is able to transform the data transiting in the second communication means (54, 154) into a representative powerline carrier current signal able to transit via the powerline (6, 106), and vice-versa.

6. The module according to one of claims 1 to 5 wherein the line feeder device (4, 104) is able to control a motor.

7. A centralized control centre (20, 120) comprising a plurality of modules (28, 128) according to one of claims 1 to 6, said modules (28, 128) being connected to one and the same electric powerline (6, 106) via which the line carrier current signal of each conversion and receipt device (32, 132) can transit.

8. The centralized control centre according to claim 7 associated with an incoming unit (52, 152) connected to the electric powerline (6, 106), said incoming unit (52, 152) being able to receive and transmit carrier current signals on line on said powerline (6, 106) to monitor and control the line feeder devices (4, 104).

9. The centralized control centre according to claim 7 further comprising at least a second carrier current interface (30', 130) which comprises a conversion and receipt device (32', 132) connected to the electric powerline (6, 106) of the modules (28, 128) of the control centre (20, 120) and connected to communication means (54, 154), said device (32', 132) being able to transform the representative powerline carrier current signal able to transit via the powerline (6, 106) into data transiting in said communication means (54, 154).

10. The centralized control centre according to claim 9 associated with an incoming unit (52, 152) connected to the communication means (54, 154) of the second carrier current interface (30', 130), said incoming unit (52, 152) being able to communicate via said communication means (54, 154) to monitor and control the line feeder devices (4, 104).

11. The centralized control centre according to one of claims 7 to 10 wherein all the carrier current interfaces (30, 30', 130) are identical.

12. The centralized control centre according to one of claims 7 to 11 wherein the impedance matching means of the modules (128) of the control centre (120) comprise an adjustable impedance device (150) between two values, and further comprising electronic means (162) for adjusting the values of the adjustable impedances (Z₁₅₀) on the basis of a memory of said means (162) giving the value of optimal impedances according to the control centre architecture (156).

13. A method for adjusting the impedances of a centralized control and monitoring centre (120) according to one of claims 7 to 12 wherein the impedance matching means of the modules (128) of said control centre (120) comprise an adjustable impedance device (150), the method comprising:
- determination of the architecture (156) of the control centre (120) comprising determination of the number (n) of carrier current interfaces (130);
- determination for said architecture (156) of the optimal impedance values of the interfaces (130) for transmission by carrier current;
- adjustment of the impedances of all the adjustable impedance devices (150) on the optimal values (Z'₁₅₀) determined.

14. A method for automated installation of a control centre according to claim 12 by successive parallel connection of the modules (128) of the control centre (120) comprising: installation of a module (128) of the control centre (120); determination by the electronic means (162) of the optimal impedance values of the interfaces (130) for transmission by carrier current for the installed architecture (156); adjustment by said electronic means (162) of the impedances of all the adjustable impedance devices (150) on the optimal values (Z'₁₅₀) determined; and reiteration of the method by installing a new module (128) of the control centre (120).

15. A method for scanning and adjustment of the impedances of a control and monitoring centre (120) according to claim 12 comprising:
- a first step of establishing control and monitoring requests of the line feeder devices (104) with the interfaces (130) and a request to determine the number (n) of interfaces (130);
- a second step of adjusting the impedances of all the adjustable impedance devices (150) by the electronic means (162) when the number of interfaces determined when the determination request is made is different from the previously determined number of interfaces;
- reiteration of the method for scanning and adjustment.

## Patentansprüche

1. Steuerungs- und Überwachungsmodul (28, 128) für den Einsatz in einer Schaltanlage (20, 120), das
- eine Trägerfrequenzschnittstelle (30, 130) mit einem ersten Eingangssystem (38) zur Stromversorgung (6, 106),
- eine Leitungsabgangseinrichtung (4, 104) mit einem Stromversorgungseingang (6, 106),
- sowie erste Kommunikationsmittel (34, 134) umfasst, die dazu dienen, zwischen die Leitungsabgangseinrichtung (4, 104) und die Trägerfrequenzschnittstelle (30, 130) geschaltet zu werden und die Möglichkeit bieten, zwischen diesen Informationen nach einem ersten Protokoll zu übertragen,
wobei die Trägerfrequenzschnittstelle (30, 130) eine Signalwandler- und -empfangseinrichtung (32, 132) umfasst, die an die ersten Kommunikationsmittel (34, 134) sowie an eine ihrerseits mit dem ersten Stromversorgungs-Eingangssystem (38) verbundene Stromleitung (36, 136) angeschlossen ist, und die genannte Einrichtung (32, 132) in der Lage ist, die über die ersten Kommunikationsmittel (34, 134) nach dem ersten Protokoll übertragenen Informationen in ein repräsentatives PLC-Trägerfrequenzsignal umzuwandeln, das über die Stromleitung (36, 136) geführt werden kann, und umgekehrt,
**dadurch gekennzeichnet dass** die Stromleitung (36, 136) der Trägerfrequenzschnittstelle (30, 130) Impedanzanpassmittel (50, 150) umfasst, derart dass die Impedanz der Trägerfrequenzschnittstelle (30, 130) mindestens einen ersten Wert und einen davon abweichenden zweiten Wert annehmen kann.

2. Modul nach Anspruch 1, bei dem das erste Eingangssystem (38) der Trägerfrequenzschnittstelle (30) mindestens zwei unterschiedliche Eingänge umfasst, wobei die Stromleitung (36) über zwei getrennte Zweige (58, 60) an die beiden Eingänge angeschlossen ist und die beiden Zweige (58, 60) unterschiedliche Impedanzen aufweisen.

3. Modul nach einem der Ansprüche 1 oder 2, bei dem die Impedanzanpassmittel eine Einrichtung mit veränderbarer Impedanz (150) in der Stromleitung (136) der Trägerfrequenzschnittstelle (130) umfassen.

4. Modul nach irgendeinem der Ansprüche 1 bis 3, bei dem die Trägerfrequenzschnittstelle (30, 130) eine zwischen einen Eingang (46) und einen Ausgang (48) geschaltete Hilfsstromleitung (44, 144) umfasst, die dazu dient, an den Stromversorgungseingang der Leitungsabgangseinrichtung (4, 104) angeschlossen zu werden, wobei die Hilfsstromleitung (44, 144) eine Impedanzanpasseinrichtung (40, 140) umfasst.

5. Modul nach einem der Ansprüche 1 bis 4, bei dem die Signalwandlereinrichtung (32, 132) an zweite Kommunikationsmittel (54, 154) angeschlossen werden kann und in der Lage ist, die über die zweiten Kommunikationsmittel (54, 154) übertragenen Informationen in ein repräsentatives PLC-Trägerfrequenzsignal umwandeln, das über die Stromleitung (6, 106) geführt werden kann, und umgekehrt.

6. Modul nach einem der Ansprüche 1 bis 5, bei dem die Leitungsabgangseinrichtung (4, 104) in der Lage ist, einen Motor anzusteuern.

7. Zentrale Schalt- und Steueranlage (20, 120) mit mehreren Modulen (28, 128) nach einem der Ansprüche 1 bis 6, welche Module (28, 128) beide an die gleiche Stromversorgungsleitung (6, 106) angeschlossen sind, über die das PLC-Trägerfrequenzsignal jeder Signalwandler- und -empfangseinrichtung (32, 132) übertragen werden kann.

8. Zentrale Schaltanlage nach Anspruch 7, die einem an die Stromversorgungsleitung (6, 106) angeschlossenen Hauptsteuergerät (52, 152) zugeordnet ist, welches Hauptsteuergerät (52, 152) in der Lage ist, PLC-Trägerfrequenzsignale über die genannte Stromleitung (6, 106) zu empfangen und zu senden, um die Leitungsabgangseinrichtungen (4, 104) zu überwachen und zu steuern.

9. Zentrale Schaltanlage nach Anspruch 7, die zusätzlich mindestens eine zweite Trägerfrequenzschnittstelle (30', 130) mit einer an die Stromversorgungsleitung (6, 106) der Module (28, 128) der Schaltanlage (20, 120) angeschlossenen sowie mit Kommunikationsmitteln (54, 154) verbundenen Wandler- und Empfangseinrichtung (32', 132) umfasst, welche Einrichtung (32', 132) in der Lage ist, das über die Stromversorgungsleitung (6, 106) geführte repräsentative PLC-Trägerfrequenzsignal in eine Information umzuwandeln, die über die genannten Kommunikationsmittel (54, 154) übertragen wird.

10. Zentrale Schaltanlage nach Anspruch 9, die einem an die Kommunikationsmittel (54, 154) der zweiten Trägerfrequenzschnittstelle (30', 130) angeschlossenen Hauptsteuergerät (52, 152) zugeordnet ist, welches Hauptsteuergerät (52, 152) in der Lage ist, Signale über die genannten Kommunikationsmittel (54, 154) zu übertragen, um die Leitungsabgangseinrichtungen (4, 104) zu überwachen und zu steuern.

11. Zentrale Schaltanlage nach einem der Ansprüche 7 bis 10, bei der alle Trägerfrequenzschnittstellen (30, 30') gleich ausgeführt sind.

12. Zentrale Schaltanlage nach einem der Ansprüche 7 bis 11, bei der die Impedanzanpassmittel der Module (128) der Schaltanlage (120) eine Einrichtung (150) mit zwischen zwei Werten veränderbarer Impedanz und darüber hinaus ein elektronisches Mittel (162) umfassen, das die Einstellung der veränderbaren Impedanzwerte (Z₁₅₀) in Abhängigkeit von in einem Speicher des genannten elektronischen Mittels (162) abgelegten Werten erlaubt, welcher Speicher die optimalen Impedanzwerte in Abhängigkeit von der Konfiguration der Schaltanlage (156) liefert.

13. Verfahren zur Anpassung der Impedanzen einer zentralen Schalt- und Steueranlage (120) nach einem der Ansprüche 7 bis 12, wobei die Impedanzanpassmittel der Module (128) der genannten Anlage (120) eine Einrichtung mit veränderbarer Impedanz (150) umfassen, welches Verfahren
- die Bestimmung der Konfiguration (156) der Schaltanlage (120) einschließlich der Bestimmung der Anzahl (n) der Trägerfrequenzschnittstellen (130),
- die Bestimmung der bei der genannten Anlagenkonfiguration (156) für die Trägerfrequenzübertragung optimalen Impedanzwerte der Schnittstellen (130),
- die Einstellung der Impedanzen aller Einrichtungen mit veränderbarer Impedanz (150) auf die bestimmten optimalen Werte (Z'₁₅₀).

14. Automatisches Verfahren zur Installation einer Schaltanlage nach Anspruch 12 durch aufeinander folgende Parallelaufschaltungen der Module (128) der Schaltanlage (120), welches Verfahren das Einsetzen eines Moduls (128) der Schaltanlage (120), die Bestimmung der bei der gegebenen Anlagenkonfiguration für die Trägerfrequenzübertragung optimalen Impedanzwerte der Schnittstellen (130) durch die elektronischen Mittel (162), die Einstellung der Impedanzen aller Einrichtungen (150) mit veränderbarer Impedanz auf die bestimmten optimalen Werte (Z'₁₅₀) durch die genannten elektronischen Mittel (162) und die Wiederholung des Verfahrens durch Einsetzen eines neuen Moduls (128) der Schaltanlage (120) umfasst.

15. Verfahren zur Messung und Anpassung der Impedanzen einer zentralen Schalt- und Steueranlage (120) nach Anspruch 12, welches Verfahren:
- einen ersten Schritt zur Erstellung der Steuer- und Überwachungsanfragen an die Leitungsabgangseinrichtungen (104) mit den Schnittstellen (130) sowie einer Anfrage zur Bestimmung der Anzahl (n) der Schnittstellen (130),
- einen zweiten Schritt zur Einstellung der Impedanzen aller Einrichtungen mit veränderbarer Impedanz (150) durch die elektronischen Mittel (162), wenn die bei der Anfrage bestimmte Anzahl der Schnittstellen von der Anzahl der zuvor bestimmten Schnittstellen abweicht,
- sowie die Wiederholung des Mess- und Anpassverfahrens umfasst.
